# EUROPEAN PATENT APPLICATION

(11) **EP 4 737 233 A1**
(43) Date of publication of application: **06.05.2026**
(21) Application number: 25213446.5
(22) Date of filing: 04.11.2025
(51) Int. Cl.: B60T 13/66, B60T 13/68, B60T 15/02, B60T 15/04, B60T 15/18, B60T 15/20, B60T 15/22

(54) **DISTRIBUTOR AND HYDRAULIC BRAKING SYSTEM OF AN AGRICULTURAL OR FORESTRY VEHICLE**

(30) Priority: 05.11.2024 IT 202400024759
(71) Applicant: Slanzi Oleodinamica S.r.l., 42017 Novellara (RE) (IT)
(72) Inventor: MAMEI, Enrico, 42017 NOVELLARA (RE) (IT); MAMEI, Andrea, 42017 NOVELLARA (RE) (IT)
(74) Representative: Studio Torta S.p.A.

(57) **Abstract**

A distributor and an hydraulic braking system of an agricultural or forestry machine having: a main line (L1) in which, in use, oil flows at a pressure greater than or equal to 11.5 MPa; a supplementary line (L2) in which, in use, oil flows at a pressure less than or equal to 3.5 MPa; a main outlet (U1) connectable to a high pressure line of a towed vehicle; and a supplementary outlet (U2) connectable to a low pressure line of a towed vehicle; wherein, the distributor (1; 101; 201) comprises a main brake valve (4; 104) and a main pilot valve (7) which are arranged, along the main line (L1); wherein, the main brake valve (4; 104) is interposed between the main inlet (I1) and the main pilot valve (7); wherein, the main pilot valve (7) is interposed between the main brake valve (4; 104) and the main outlet (U1); wherein, the main pilot valve (7) is controlled by the main control (6).

## Description

### CROSS-REFERENCE TO RELATED APPLICATIONS

This patent application claims priority from Italian patent application no. 102024000024759 filed on November 5, 2024, the entire disclosure of which is incorporated herein by reference.

### TECHNICAL FIELD

The present invention relates to a distributor and to a hydraulic braking system of an agricultural or forestry machine.

### PRIOR ART

It is known that an agricultural or forestry machine must be provided with a main line crossed by high pressure oil and a secondary line crossed by low pressure oil separate from one another, so that one line can ensure the braking of the towed vehicle also in case of malfunctioning of the other line.

Known examples of distributors and hydraulic systems that implement the solution described above are described in EP3064408 B1 and in EP3202629 B1.

### DESCRIPTION OF THE INVENTION

The object of the present invention is to provide an improved distributor and an improved hydraulic braking system. According to the present invention, a distributor and a hydraulic braking system are provided according to what is claimed in the appended claims.

The dependent claims define particular embodiments of the invention.

### BRIEF DESCRIPTION OF THE DRAWINGS

In order to better understand the invention, embodiments thereof are described in the following by way of non-limiting example and with reference to the accompanying drawings wherein:
- Figure 1 is a schematic view, with some parts removed for clarity, of a distributor according to the present invention; and,
- Figure 2 illustrates, in a schematic manner and with some parts removed for clarity, an example of a system according to the present invention;
- Figure 3 illustrates, in a schematic manner and with some parts removed for clarity, a variant of a system according to the present invention;
- Figure 4 illustrates, in a schematic manner and with some parts removed for clarity, a further variant of a system according to the present invention.

### EMBODIMENTS OF THE INVENTION

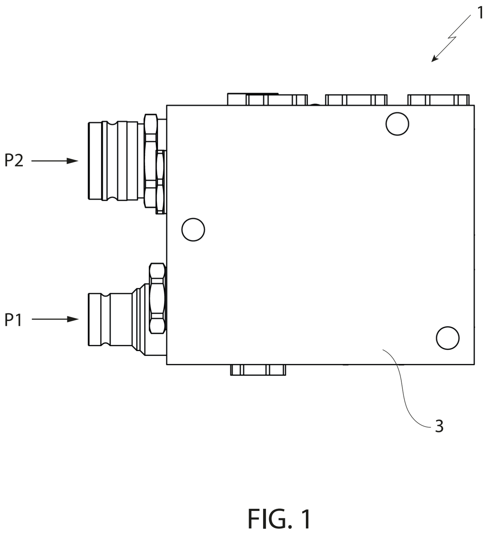

In Figure 1, the reference numeral 1 is used for a hydraulic brake distributor of an agricultural or forestry machine (of known type and not illustrated), in particular for the braking of a towed vehicle (of known type and not illustrated) coupled to the agricultural or forestry machine.

The distributor 1 is a component of a hydraulic braking system 2 of the tractor. In particular, the hydraulic system 2 is configured, as will be better illustrated in the following, to send high pressure oil along a main line L1 and low pressure oil along a supplementary line L2 to the towed vehicle.

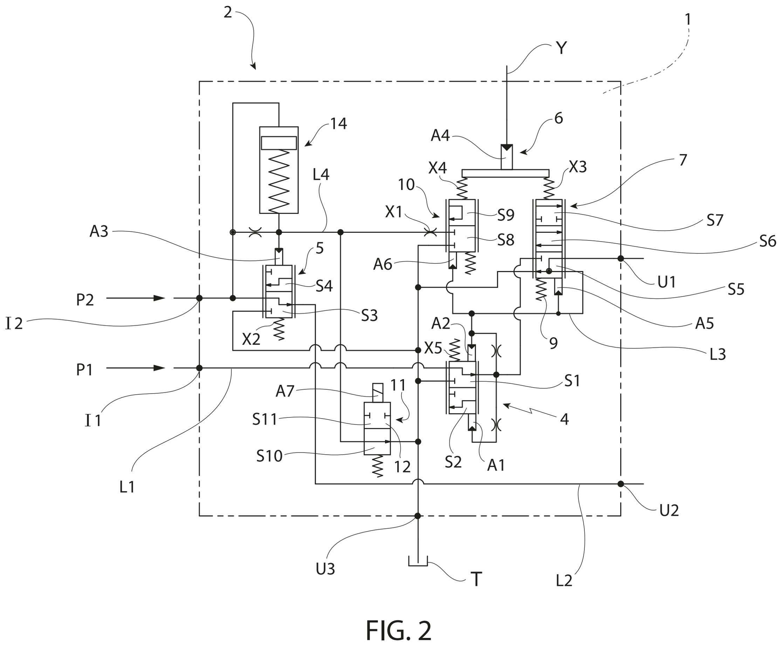

Figure 2 illustrates the diagram of an embodiment of the hydraulic system 2 of an agricultural or forestry machine comprising a distributor 1 according to the present invention.

In particular, the distributor 1 comprises: a main inlet I1 connectable (in a known manner and schematically illustrated) to a main delivery P1 of high pressure oil; a supplementary inlet I2 connectable (in a known manner and schematically illustrated) to a supplementary delivery P2 of low pressure oil; a main outlet U1 connectable (in a known manner and schematically illustrated) to the high pressure line of a towed vehicle; and a supplementary outlet U2 connectable (in a known manner and schematically illustrated) to a low pressure line; a discharge outlet U3 connectable (in a known manner and schematically illustrated) to a discharge T.

The main delivery P1 is configured to feed oil at a pressure up to at least 11.5 Mpa to the main line L1.

The supplementary delivery P2 is configured to feed the supplementary line L2. Preferably, the supplementary delivery P2 continuously feeds oil at a pressure less than or equal to 3.5 MPa.

The distributor 1 comprises a body 3 inside which chambers and conduits are made for the passage of oil and the housing of valves, as illustrated in the following.

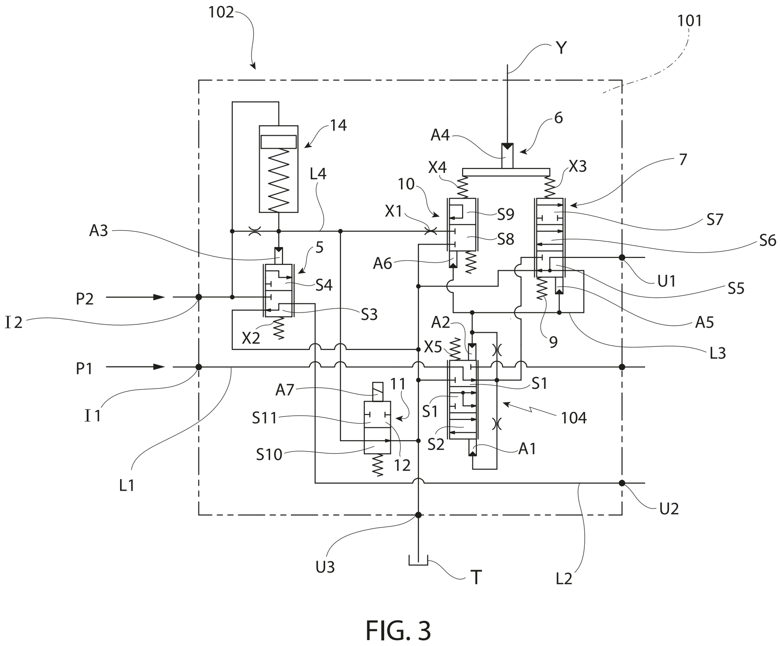

In particular, according to the example illustrated in Figure 2, the distributor 1 comprises a main brake valve 4 arranged, along the main line L1, between the main inlet I1 and the main outlet U1. The main brake valve 4 is configured to selectively send, in use, high pressure oil to the towed vehicle, as will be better illustrated in the following. The main brake valve 4 is crossed by the line L1 and is connected to the discharge outlet U3 when it is in a discharge position S2, as will be better illustrated in the following. The main brake valve 4 can be chosen within a group of valves different from one another by type. According to the illustrated example, the main brake valve 4 is a two-position, three-way slide valve. In the example of Figure 2, the main brake valve 4 has a delivery position S1 and a discharge position S2. According to the variants (Figure 3), the main brake valve 4 has a plurality of delivery positions S1. The main brake valve 4 comprises an actuator A1, which is operable as a function of the pressure along the main line LI between the valve 4 and the valve 7, and an actuator A2, which is operable as a function of the pressure along a signal line L3. The main brake valve 4 comprises a calibration spring X5 in opposition to the actuator A1.

The distributor 1 further comprises a supplementary brake valve 5 arranged, along the supplementary line L2, between the supplementary inlet I2 and the supplementary outlet U2. The supplementary brake valve 5 is configured to send, in use, low pressure oil to the towed vehicle. The supplementary brake valve 5 is a slide valve. Advantageously, the supplementary brake valve 5 is a three-way, two-position valve. In particular, the supplementary brake valve 5 has a delivery position S3 and a discharge position S4. The supplementary brake valve 5 comprises an actuator A3, which is operable as a function of the pressure along a supplementary signal line L4 and a calibration spring X2.

The distributor 1 further comprises a main control 6 and a main pilot valve 7. The main pilot valve 7 is interposed, along the main line L1, between the main brake valve 4 and the main outlet U1. The main pilot valve 7 is controlled by the main control 6. The main pilot valve 7 has a rest position S5, a working position S6, in particular of pressure drop on the main outlet U1, and a further working position S7, in particular of pressure increase on the main outlet U1.

The main control 6 is a control of known type, and schematically illustrated in its simplest version. The main control 6 can be chosen within a group of controls different from one another by type. Versions with several actuators are also usable and known, both hydraulic and manual, as well as electric or electro-hydraulic. In the example of Figure 2, the main control 6 comprises a braking actuator A4 operable directly by the braking oil pressure of the towing vehicle. The braking actuator A4 can be chosen within a group of actuators different from one another (for example it can be of mechanical and/or electrical type) and adapted to operate the main pilot valve 7, following a pulse imparted by an operator. In particular, the main control 6 is configured to operate the main pilot valve 7. Advantageously, the main pilot valve 7 comprises a calibration spring X3, which is configured to adjust the force necessary to move the main pilot valve 7 and put the main brake valve 4 in communication with the main outlet U1 until the maximum braking pressure required on the main outlet U1 is reached along the main line L1.

The main pilot valve 7 further comprises an actuator A5 which is operable as a function of the pressure along the signal line L3 and the calibration spring X3 pushed by the main control 6. The actuator A5 is in opposition to the main control 6. The main pilot valve 7 further comprises elastic return elements 9, which are configured to bring the main pilot valve 7 to the rest position S5, when the main pilot valve 7 is not activated by the main control 6.

The main pilot valve 7 is configured to activate the braking and controls the braking pressure.

The distributor 1 further comprises a supplementary pilot valve 10 which is configured to operate the supplementary brake valve 5, in the event of anomalies during braking. The main control 6 is configured to directly operate the supplementary pilot valve 10. The main control 6 operates in parallel and simultaneously both the main pilot valve 7 and the supplementary pilot valve 10. The supplementary pilot valve 10 is a two-position, two-way slide valve. The supplementary pilot valve 10 has an interruption position S8 and a discharge position S9. The supplementary pilot valve 10 comprises an actuator A6, which is operable as a function of the pressure along the signal line L3 and a calibration spring X4 pushed by the main control 6. The actuator A6 is in opposition to the main control 6.

The supplementary pilot valve 10 is configured to: verify that the main pilot valve 7 generates a sufficient pressure; and, operate the supplementary brake valve 5, as an emergency brake, if the pressure generated by the main pilot valve 7 is not sufficient.

The distributor 1 further comprises a supplementary control 11 comprising a valve 12 and a braking actuator A7, which can be chosen within a group of actuators different from one another (for example it can be of mechanical and/or electrical type) and adapted to operate the valve 12, following a pulse imparted by an operator. The valve 12 is a two-way, two-position valve. The valve 12 has a discharge position S10 and an interruption position S11.

The signal line L3 puts in fluidic communication one way of the main pilot valve 7 with: the actuator A2 of the main brake valve 4, the actuator A5 of the main pilot valve 7, and the actuator A6 of the supplementary pilot valve 10.

The supplementary signal line L4 puts in fluidic communication the actuator A3 of the supplementary brake valve 5 with: one way of the supplementary pilot valve 10 through the throttling X1, and one way of the valve 12 of the supplementary control 11.

Figure 2 illustrates the system 2 in the rest condition. According to the configuration illustrated in Figure 2: the supplementary outlet U2 is connected via the supplementary brake valve 5 to the discharge outlet U3; the main outlet U1 is put in communication, via the rest position S5 of the main pilot valve 7, with the discharge outlet U3. In the configuration illustrated in Figure 2, the parking braking system of the towed vehicle is operated, therefore, the wheels of the towed vehicle are locked.

Advantageously, the distributor 1 of the type described above allows keeping the main outlet U1 connected with the discharge outlet U3, when braking is not in progress. In other words, when the main pilot valve 7 is in the rest position S5, the pressure at the main outlet U1 is less than 0.2 MPa.

In order to brake the towed vehicle, an operator acts on the main control 6 (for example, a brake pedal of the vehicle) so as to operate the braking actuator A4. If the operating force of the actuator A4 exceeds the resisting force generated by the elastic return elements 9 and/or by the actuator A5, the main pilot valve 7 slides from the rest position S5 to the working positions S6 and S7. In the working position S6, the main pilot valve 7 puts the main line L1 in communication with the main outlet U1 so as to send high pressure oil to the main line of the towed vehicle. Advantageously, the calibration spring X3 and the actuator A5 are configured to be able to adjust the value of the oil pressure sent to the main outlet U1 when the main pilot valve 7 is moved to the working position S6.

Therefore, as described above, the main control 6 does not control the opening and closing of the main brake valve 4. In fact, the main pilot valve 7 and the calibration system formed by the calibration spring X3 and the actuator A5 are interposed between the main control 6 and the main brake valve 4. Therefore, unlike the solutions already known, for example from EP3064408 B1, the action of the operator on the main control 6 does not cause a direct movement of the main brake valve 4.

Advantageously, the distributor 1 according to the present invention allows calibrating, via the elastic element X5, the minimum value of the oil pressure sent from the main line L1 to the towed vehicle upon the movement of the main pilot valve 7 in the working position S6.

Furthermore, advantageously, the distributor 1 of the type described above allows the oil to be sent, instantaneously, to the towed vehicle at a pressure greater than a certain value. In other words, there is no transient during which the pressure sent to the towed vehicle increases progressively (without this determining a braking force). Therefore, the distributor 1 of the type described above allows to instantaneously send oil to the towed vehicle at a certain pressure. In other words, the distributor 1 of the type described above allows optimizing the operation also as a function of the generally known "braking advance" of the towed vehicle, without the need to integrate further (expensive) devices.

In the event of a fault along the main line L1 (for example, a fault can be understood as the loss of oil or the presence of damage along the main line L1 or inside the distributor 1 or in the main delivery P1, such as the breakage of the pump for the main delivery P1) if the operator acts on the main control 6 so as to operate the braking actuator A4, the main pilot valve 7 generates on the signal line L3 a pressure lower than the corresponding calibration pressure of the supplementary pilot valve 10 which, consequently, moves from the interruption position S8 to the discharge position S9. In this configuration, the pressure in the supplementary signal line L4 (fed by a storage device 14) is discharged through a throttling X1 in input to the supplementary pilot valve 10. Once the accumulation of oil in the storage device 14 is exhausted, the pressure on the line L4 drops below the calibration value of the calibration spring X2 and the supplementary brake valve 5 moves from the delivery position S3 to the discharge position S4.

In this manner, the supplementary outlet U2 is connected with the discharge T. Therefore, the supplementary line L2 no longer sends low pressure oil to the towed vehicle and the parking braking system (of the towed vehicle of known type and not illustrated) is automatically activated, in a known manner, to brake the wheels of the towed vehicle.

When the operator operates the parking brake (for example a hand brake) or the emergency brake, the supplementary control 11 is also operated, causing a pressure variation in the supplementary signal line L4, since there are no throttlings (i.e., orifices), the pressure drops very quickly. This removes the thrust of the actuator A3 and the calibration spring X2 moves the supplementary brake valve 5 from the delivery position S3 to the discharge position S4. In this manner, the supplementary outlet U2 is connected with the discharge T. Therefore, the supplementary line L2 no longer sends low pressure oil to the towed vehicle and the parking braking system (of the towed vehicle of known type and not illustrated) is automatically activated, in a known manner, to brake the wheels of the towed vehicle.

The distributor 1 and the system 2 of the type described above guarantee an automatic emergency braking of the towed vehicle, in the event of a failure along the main line L1. Therefore, the distributor 1 and the system 2 of the type described above, in addition to complying with the requirements of EU regulation 167/2013, relating to the braking of vehicles for the purpose of the approval of agricultural and forestry vehicles, guarantee a higher level of safety of the tractor, since the emergency braking in the event of a failure along the main line L1 takes place in an automated manner and is independent of the operator's abilities.

The distributor 1 of the type described above is simplified and simpler and less expensive to produce, with respect to other solutions of known type.

In Figure 3, the reference numeral 102 indicates the diagram of a variant of the hydraulic system of an agricultural or forestry machine according to the present invention. In Figure 3, the components in common with the example described above maintain the same numbering and are considered comprised therein without repeating them, for the sake of brevity. In particular, according to the example illustrated in Figure 3, the high pressure oil feed pump P1 has a fixed displacement and the main brake valve 104 has an additional working position: the number of positions of the main brake valve 104 is variable.

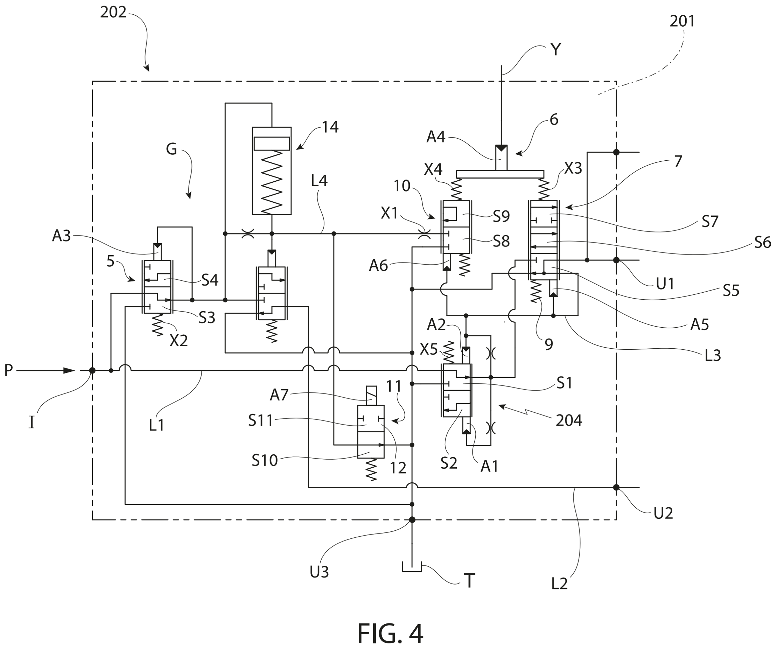

In Figure 4, the reference numeral 202 indicates the diagram of a variant of the hydraulic system of an agricultural or forestry machine according to the present invention. In Figure 4, the components in common with the example described above maintain the same numbering and are considered comprised therein without repeating them, for the sake of brevity. In particular, according to the example illustrated in Figure 4, the distributor 201 of Figure 3 has a single oil inlet I which is configured to be connected to a single high-pressure oil delivery P. For example, the delivery P is a variable displacement feed pump of the Load Sensing type. The maximum inlet oil pressure is greater than 11.5 MPa. According to the example illustrated in Figure 4, the supplementary line L2 is fed as a branch of the main line L1 and the distributor 201 comprises a pressure reduction group G to obtain the desired pressure along the supplementary line L2. The oil pressure along the supplementary line L2 can be approximately comprised between 1.5 and 3.5 MPa.

The variants 101 and 201 have the same advantages as the system 1 described above and operate *mutatis mutandis* in a manner similar to that described above.

## Claims

1. An hydraulic brake distributor of an agricultural or forestry machine having: a main line (L1) crossed, in use, by oil at a first pressure, in particular a maximum pressure greater than or equal to 11.5 MPa; and a supplementary line (L2) crossed, in use, by oil at a second pressure, in particular a pressure less than or equal to 3.5 MPa; a main outlet (U1) connectable to a high pressure line of a towed vehicle; and a supplementary outlet (U2) connectable to a low pressure line of a towed vehicle; wherein, the distributor (1; 101; 201) comprises a main brake valve (4; 104) and a main pilot valve (7) which are arranged, along the main line (L1) ; wherein, the main brake valve (4; 104) is interposed between the main inlet (I1) and the main pilot valve (7); wherein, the main pilot valve (7) is interposed between the main brake valve (4; 104) and the main outlet (U1); wherein, the main pilot valve (7) is controlled by the main control (6).

2. A distributor according to claim 1, wherein the main pilot valve (7) has: a rest position (S5), a first working position (S6), in which it lowers the oil pressure towards the main outlet (U1) and a second working position (S7), in which it increases the oil pressure towards the main outlet (U1).

3. A distributor according to claim 2, and having a discharge outlet (U3) connectable to a discharge (T); wherein, when the main pilot valve (7) is in the rest position (S5), the main outlet (U1) is placed in communication via the main pilot valve (7) with the discharge outlet (U3).

4. A distributor according to claim 1 or 2, wherein the main brake valve (4; 104) is a slide valve; wherein the main brake valve (4; 104) has one or more delivery positions (S1) and one or more discharge positions (S2).

5. A distributor according to claim 4, wherein the main inlet (I1) is in fluidic communication with the main outlet (U1) via the main pilot valve (7) and the main brake valve (4; 104) when: the main pilot valve (7) is in a working position (S6; S7) and the main brake valve (4; 104) is in the delivery position (S1).

6. A distributor according to any one of the preceding claims and comprising a supplementary brake valve (5) arranged along the supplementary line (L2); wherein, the distributor (1; 101; 201) further comprises a supplementary pilot valve (10), which is configured to operate the supplementary brake valve (5) as a function of the pressure along the main line (L1) and of the calibration of an actuator (A4).

7. A distributor according to claim 6, wherein the main control (6) is configured to directly operate the supplementary pilot valve (10); in particular, the main control (6) is configured to operate in parallel and simultaneously both the main pilot valve (7) and the supplementary pilot valve (10).

8. A distributor according to claim 6 or 7 and having a signal line (L3), which puts in fluidic communication one way of the main pilot valve (7) with: a first actuator (A2) of the main brake valve (4); a second actuator (A5) of the main pilot valve (7); and, a third actuator (A6) of the supplementary pilot valve (10).

9. An hydraulic braking system of an agricultural or forestry machine comprising a hydraulic distributor (1; 101; 201) according to any one of the preceding claims.
